# EUROPEAN PATENT APPLICATION

(11) **EP 4 079 877 A2**
(43) Date of publication of application: **26.10.2022**
(21) Application number: 20902840.6
(22) Date of filing: 18.12.2020
(51) Int. Cl.: C21D 10/00, C21D 8/12

(54) **GRAIN-ORIENTED ELECTRICAL STEEL SHEET AND MAGNETIC DOMAIN REFINEMENT METHOD THEREOF**

(30) Priority: 20.12.2019 KR 20190172475
(71) Applicant: POSCO, Pohang-si, Gyeongsangbuk-do 37859 (KR)
(72) Inventor: KWON, Oh-Yeoul, Pohang-si, Gyeongsangbuk-do 37859 (KR); KIM, Woo-Sin, Pohang-si, Gyeongsangbuk-do 37859 (KR); KIM, Dae-Uk, Pohang-si, Gyeongsangbuk-do 37859 (KR); PARK, Jong-Tae, Pohang-si, Gyeongsangbuk-do 37859 (KR)
(74) Representative: Zech, Stefan Markus
(86) International application number: PCT/KR2020/018722
(87) International publication number: WO 2021/125902

(57) **Abstract**

A grain-oriented electrical steel sheet according to an embodiment of the present invention has an average degree of orientation difference of 0.5 to 10° between recrystallized grains that are in contact with a groove present on the surface of the electrical steel sheet and the bottom of the groove, and other recrystallized grains.

## Description

### [Technical Field]

An embodiment of the present invention relates to a grain-oriented electrical steel sheet and a magnetic domain refinement method thereof. More specifically, an embodiment of the present invention relates to a grain-oriented electrical steel sheet that minimizes a deterioration in a magnetic flux density by completely encroaching a bottom of a groove into a secondary recrystallization structure of a base part during stress relaxation or recrystallization during annealing heat treatment at a temperature higher than a recrystallization temperature of the grain-oriented electrical steel sheet, and a magnetic domain refinement method thereof.

### [Background Art]

Since a grain-oriented electrical steel sheet is used as an iron core material for electronic products such as a transformer, in order to improve energy conversion efficiency by reducing power loss in equipment, a steel sheet with an excellent iron loss and a high space factor during lamination and winding is required.

The grain-oriented electrical steel sheet is referred to as a functional steel sheet having a texture (also called "Goss texture") in which secondarily recrystallized grains through hot rolling, cold rolling, and annealing processes are oriented in a {110}<001> direction as a rolling direction.

As a method of lowering an iron loss of a grain-oriented electrical steel sheet, a magnetic domain refinement method is known. In other words, the method is to refine a size of a large magnetic domain of a grain-oriented electrical steel sheet by imparting a scratch or an energy impact to the magnetic domain. In this case, when the magnetic domain is magnetized and its direction is changed, the energy consumption may be reduced compared to when the size of the magnetic domain is large. The magnetic domain refinement methods may include permanent magnetic domain refinement that maintains the improvement effect even after heat treatment, and otherwise, temporary magnetic domain refinement.

The permanent magnetic domain refinement method that shows the effect of improving the iron loss even after the stress relaxation heat treatment at a temperature higher than the heat treatment temperature at which recovery appears may be divided into an etching method, a roll method, and a laser method. Since the etching method forms a groove on a surface of the steel sheet by a selective electrochemical reaction in a solution, it is difficult to control the shape of the groove, and uniformly secure the iron loss characteristics of the final product in a width direction. In addition, it has a disadvantage that the etching method is not environmentally friendly due to an acid solution used as a solvent.

The permanent magnetic domain refining method using a roll is a magnetic domain refinement technology that forms a groove with a certain width and depth on a plate surface by processing a projection on the roll and pressing the roll or a plate, and then anneals the groove to improve the iron loss by partially causing recrystallization at a bottom of the groove. The roll method has disadvantages in that it is difficult to obtain stability against machining and stable iron loss according to a thickness, the process is complicated, and the iron loss and magnetic flux density characteristics deteriorate immediately after the formation of the groove (before stress relaxation annealing).

The permanent magnetic domain refinement method by laser uses a method of irradiating a high-power laser to a surface part of an electrical steel sheet moving at high speed, and forming a groove accompanied by melting of a base part by laser irradiation.

### [Disclosure]

### [Technical Problem]

The present invention has been made in an effort to provide a grain-oriented electrical steel sheet and a method for manufacturing the same. The present invention has been made in an effort to provide a grain-oriented electrical steel sheet and a method for manufacturing the same having advantages of minimizing a deterioration in magnetic flux density by encroaching a stress concentration part or a re-solidification structure formed at a bottom of a groove into a secondary recrystallization structure of a base part during re-coating or stress relaxation annealing at a temperature higher than a recrystallization temperature.

### [Technical Solution]

An exemplary embodiment of the present invention provides a grain-oriented electrical steel sheet, in which an average degree of orientation difference between recrystallized grains that are in contact with a groove present on a surface of the electrical steel sheet and a bottom of the groove, and other recrystallized grains is of 0.5 to 10°.

The recrystallized grain in contact with the bottom of the groove may include a sub boundary, and the sub boundary having a length of 10 µm to 700 µm per groove may be present.

1 to 10 sub boundaries may be present per groove.

The grain-oriented electrical steel sheet may further include an insulation film in contact with the groove.

A depth of the groove may be 3 to 15% of a thickness of the steel sheet, and a width of the groove may be 10 to 50 µm.

Another embodiment of the present invention provides a magnetic domain refinement method of a grain-oriented electrical steel sheet: including preparing a cold-rolled steel sheet; primary recrystallization annealing the cold-rolled steel sheet; forming a groove by irradiating a laser to the steel sheet subjected to the secondary recrystallization annealing; and forming an insulation film on the steel sheet on which the groove is formed.

When the laser is irradiated, an energy density of the laser may be 3.0 to 8.0 J/mm².

A laser output may be 500 W or more, a laser scanning speed may be 5 m/s or more, and a laser scanning distance may be 100 mm or more.

A wavelength of the laser may be 1.06 to 10.6 µm.

The length of the laser beam may be 100 to 500 µm, and the width of the laser beam may be 10 to 27 µm.

The forming of the insulation film may include performing heat treatment at a temperature of 750 to 950°C.

### [Advantageous Effects]

According to an embodiment of the present invention, it is possible to improve an iron loss during an annealing process at a temperature higher than a recrystallization temperature by forming the groove and minimize a deterioration in a magnetic flux density by appropriately forming a degree of grain orientation at a bottom of a groove within 10°.

### [Description of the Drawings]

FIG. 1 is a schematic diagram of a rolled plane (ND plane) of a grain-oriented electrical steel sheet according to an embodiment of the present invention.
FIG. 2 is a schematic diagram of a cross section (TD plane) of the grain-oriented electrical steel sheet according to the embodiment of the present invention.
FIG. 3 is a schematic diagram of a cross section (TD plane) of the existing grain-oriented electrical steel sheet.
FIG. 4 is a schematic diagram of a cross section (TD plane) of the grain-oriented electrical steel sheet according to the embodiment of the present invention.
FIG. 5 is a schematic diagram illustrating a shape of a laser beam
according to an embodiment of the present invention.

### [Mode for Invention]

The terms first, second, third, and the like are used to describe, but are not limited to, various parts, components, areas, layers and/or sections. These terms are used only to distinguish a part, component, region, layer, or section from other parts, components, regions, layers, or sections. Accordingly, a first part, a component, an area, a layer, or a section described below may be referred to as a second part, a component, a region, a layer, or a section without departing from the scope of the present disclosure.

Terminologies used herein are to mention only a specific exemplary embodiment, and do not limit the present invention. Singular forms used herein include plural forms as long as phrases do not clearly indicate an opposite meaning. The meaning "including" used in the present specification concretely indicates specific properties, areas, integer numbers, steps, operations, elements, and/or components, and is not to exclude presence or addition of other specific properties, areas, integer numbers, steps, operations, elements, and/or components thereof.

When a part is referred to as being "above" or "on" other parts, it may be directly above or on other parts, or other parts may be included in between. In contrast, when a part is referred to as being "directly above" another part, no other part is involved in between.

All terms including technical terms and scientific terms used herein have the same meaning as the meaning generally understood by those skilled in the art to which the present invention pertains unless defined otherwise. All terms including technical terms and scientific terms used herein have the same meaning as the meaning generally understood by those skilled in the art to which the present invention pertains unless defined otherwise.

Hereinafter, an exemplary embodiment of the present invention will be described in detail so that a person of ordinary skill in the art to which the present invention pertains can easily implement the present invention. As those skilled in the art would realize, the described embodiments may be modified in various different ways, all without departing from the spirit or scope of the present invention.

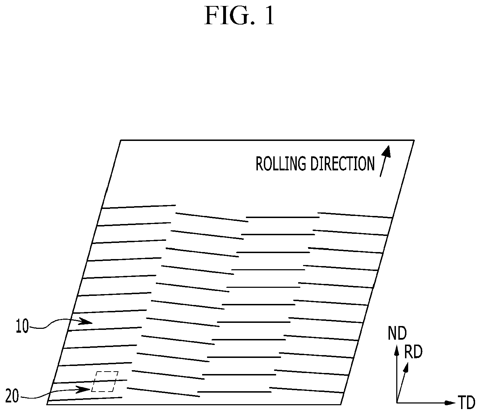

FIG. 1 illustrates a schematic diagram of a magnetic domain-refined grain-oriented electrical steel sheet 10 according to an embodiment of the present invention.

As illustrated in FIG. 1, the grain-oriented electrical steel sheet 10 according to the embodiment of the present invention has a linear groove 20 formed on one or both sides of the electrical steel sheet in a direction crossing a rolling direction (RD direction).

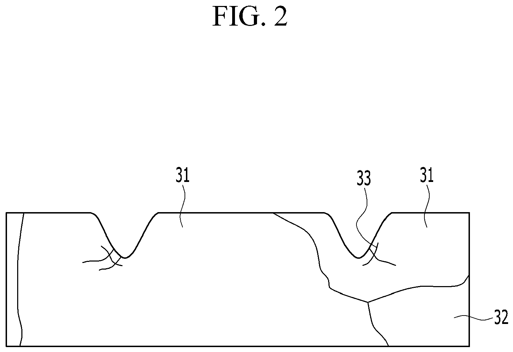

As illustrated in FIG. 1, a longitudinal direction (RD in FIG. 1, X direction in FIG. 2) and the rolling direction (RD direction) of the groove 20 may form an angle of 75 to 88°. When the groove 20 is formed at the above-described angle, it may contribute to improving an iron loss of the grain-oriented electrical steel sheet.

The groove 20 may be formed continuously or intermittently along a rolling transverse direction (TD) of the steel sheet. When formed intermittently, 2 to 10 grooves may be formed along the rolling transverse direction (TD) of the steel sheet. FIG. 1 illustrates a case in which four grooves 20 are intermittently formed.

FIG. 2 is a schematic diagram of a cross section (TD plane) of the grain-oriented electrical steel sheet according to the embodiment of the present invention.

As illustrated in FIG. 2, the grain-oriented electrical steel sheet according to the embodiment of the present invention has a groove 20 on its surface, and includes a secondary recrystallized grain 31 in contact with a bottom of the groove 20. In an embodiment of the present invention, by controlling a degree of orientation of the secondary recrystallized grain 31, it is possible to minimize a deterioration in magnetism due to the formation of the groove 20.

The secondary recrystallized grain 31 in contact with the bottom of the groove 20 is distinguished from other recrystallized grains 32. The other secondary recrystallized grains 32 are secondary recrystallized grains 32 that do not come into contact with the groove 20, and may include secondary recrystallized grains 32 formed near the surface where the grooves 20 are not formed or secondary recrystallized grains 32 formed inside the steel sheet.

In an embodiment of the present invention, since the size of the secondary recrystallized grain 31 in contact with the bottom of the groove 20 is a grain size ranging from several millimeters to several tens of millimeters appearing in a normal grain-oriented electrical steel sheet, most grains penetrated in a thickness direction are shown.

Assuming an imaginary circle having the same area as the recrystallized grain 31 with respect to a transverse plane (TD plane) in the rolling direction, a particle size of the secondary recrystallized grain 31 is calculated by a diameter of the circle.

In an embodiment of the present invention, the degree of orientation of the secondary recrystallized grain 31 in contact with the groove is controlled by various process conditions, but the most important process condition is the energy density condition during laser irradiation along with the shape of the laser beam formed on the steel sheet. That is, a groove is formed in the secondary recrystallized plate, and in the case where the energy density condition is appropriate when heat treatment is performed at a temperature higher than the recrystallization temperature of the steel sheet, the average degree of grain orientation difference between the secondarily recrystallized grains in contact with the groove 20 may be formed at 0.5 to 10°. More specifically, the average degree of grain orientation difference may be 0.5 to 5°.

When the laser is irradiated to the secondarily recrystallized steel sheet, an impact by laser heat is generated at the bottom of the groove 20, and some of these are formed as a sub boundary 33. After the groove 20 is formed, the sub boundary 33 grows during the heat treatment in the insulation film forming process.

The sub boundary 33 is defined as a defect generating part within a grain that is caused by locally increasing the density of lattice defect parts such as dislocations or twins within the same grain as a result of local application of thermal or mechanical stress, and is different from a general grain boundary because a crystal lattice appears only in a limited region.

The sub boundary may be present in a continuous or discontinuous length of 10 µm to 700 µm per groove in the secondarily recrystallized grain 31 in contact with the groove 20. A reference plane is a plane where the groove 20 is cut in a longitudinal direction, and may be detected by determining the sub boundary 33 where a crystal orientation difference of 0.5 to 10° appears near the bottom of the groove 20 located in the grain, and measuring a length of the sub boundary 33, when analyzing the secondarily recrystallized grain 31 in contact with the groove 20 in a photograph measured by SEM or electron backsatter diffraction (EBSD).

When the length of the sub boundary 33 is too long or too short, it adversely affects the degree of orientation of the secondarily recrystallized grain 31 in contact with the groove 20, and ultimately the magnetism deteriorates. More specifically, the length of the sub boundary 33 may be 300 to 700 µm.

A plurality of sub-boundaries may be present intermittently, and in this case, the sum of all lengths of sub-boundaries existing near the groove in the secondarily recrystallized grain 31 may satisfy the above-described range.

As described above, 1 to 10 sub boundaries may be present per groove.

The length of the sub boundary 33 may be affected by the energy density of the laser when the groove 20 is formed, the shape of the laser beam, and the heat treatment conditions in the insulation film forming process after the groove 20 is formed, etc.

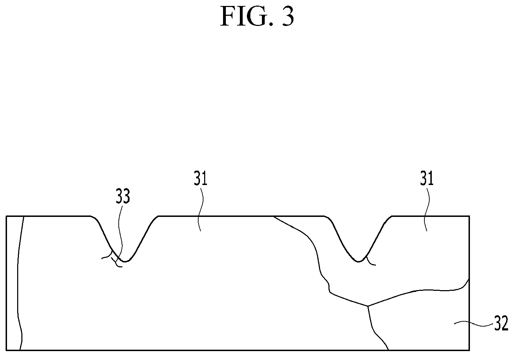

FIG. 3 illustrates a case in which a groove is formed by irradiating a laser after the insulation film is formed. As illustrated in FIG. 3, it may be seen that the sub boundary 33 is formed less than in FIG. 2 in the secondarily recrystallized grain 31 in contact with the groove 20.

This is because the sub boundary 33 was formed only by the thermal shock of the laser, and thereafter, the sub boundary 33 did not grow properly.

In this case, unlike the embodiment of the present invention, the degree of orientation difference between the secondarily recrystallized grain 31 in contact with the groove 20 and other secondarily recrystallized grains 32 exceeds 10°. In this case, as described above, the magnetic flux density may greatly deteriorate.

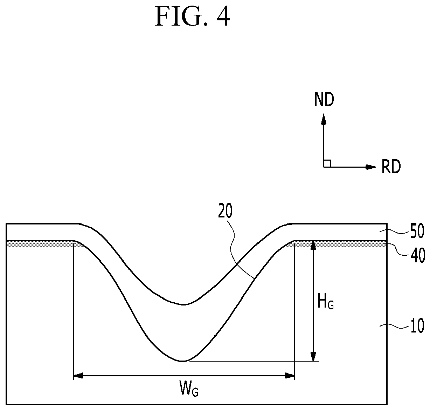

FIG. 4 is a schematic diagram of a cross section (TD surface) of the grain-oriented electrical steel sheet according to the embodiment of the present invention.

The formation of the groove 20 according to the embodiment of the present invention will be described with reference to FIG. 4.

A width W_{G} of the groove 20 may be 10 to 50 µm. When the width of the groove 20 is short or large, an appropriate magnetic domain refining effect may not be obtained.

A depth H_{G} of the groove may be 3 to 15% of the thickness of the steel sheet. When the depth of the groove is too shallow, the effect of improving an iron loss may not be sufficiently obtained. When the depth of the groove is too deep, the structural properties of the steel sheet 10 may be greatly changed due to strong laser irradiation, or a large amount of heal-up and spatter may be formed to deteriorate the magnetism. Accordingly, the depth of the groove 20 may be controlled within the above-described range. More specifically, the depth of the groove 20 may be 5 to 10% of the thickness of the steel sheet.

As described above, in the embodiment of the present invention, since the groove is formed by irradiating a laser to the steel sheet subjected to the secondary recrystallization annealing, a metal oxide layer 40 may not present on the groove. The metal oxide layer 40 is a layer formed by reacting an annealing separator with an oxide layer on the surface of the steel sheet during the secondary recrystallization annealing process. For example, when an MgO annealing separator is applied, a forsterite layer is formed. As illustrated in FIG. 4, the metal oxide layer 40 is present on the steel sheet 10 in which the groove 20 is not formed, whereas the metal oxide layer 40 is not present on the groove 20.

Thereafter, as described above, since the insulation film is formed, the insulation film 50 may be present in contact on the groove. That is, the metal oxide layer 40 is not present between the groove 20 and the insulation film 50.

As the insulation film 50, a general insulation film may be used without limitation. For example, the insulation film 50 may include 10 wt% or less of inorganic nitride, 60 wt% or less of silica, and 60 wt% or less of metal phosphate. In addition, the insulation film 50 may further include up to 4% by weight of boric acid.

Another embodiment of the present invention provides a magnetic domain refinement method of a grain-oriented electrical steel sheet: including preparing a cold-rolled steel sheet; primary recrystallization annealing the cold-rolled steel sheet; forming a groove by irradiating a laser to the steel sheet subjected to the secondary recrystallization annealing; and forming an insulation film on the steel sheet on which the groove is formed.

First, a cold-rolled steel sheet is prepared. In an embodiment of the present invention, the magnetic domain refinement method and the formed groove 20 and the recrystallized grain 31 present at the bottom of the groove 20 have their characteristics, and the cold-rolled steel sheet that is the subject of the magnetic domain refinement may be used without limitation. In particular, the effect of the present invention is expressed regardless of an alloy composition of the cold-rolled steel sheet. Therefore, a detailed description of the alloy composition of the cold-rolled steel sheet will be omitted.

Next, the cold-rolled sheet is subjected to the primary recrystallization annealing.

The step of primary recrystallization annealing is widely known in the field of grain-oriented electrical steel sheet, and therefore, a detailed description thereof will be omitted. The cold-rolled sheet may include decarburization or decarburization and nitridation in the primary recrystallization annealing process, and may be annealed in a wet atmosphere for decarburization or decarburization and nitridation. The cracking temperature in the primary recrystallization annealing step may be 710 to 870°C. In addition, a dew point temperature may be 40 to 70°C.

Next, the annealing separator is applied, and the secondary recrystallization annealing is performed. The annealing separator is widely known, and therefore, a detailed description thereof will be omitted. As an example, the annealing separator containing MgO as a main component may be used.

The purpose of the secondary recrystallization annealing is to give insulation by forming a {110}<001> texture by the secondary recrystallization, and forming a metal oxide (vitreous) film 40 by the reaction of the oxide layer formed during the primary recrystallization annealing and MgO, and to remove impurities that impair magnetic properties. As a method of secondary recrystallization annealing, by maintaining a mixed gas of nitrogen and hydrogen to protect nitride, which is a particle growth inhibitor, in a temperature rising section before the secondary recrystallization occurs, it is possible to develop the secondary recrystallization well and remove impurities by maintaining the secondary recrystallization in a 100% hydrogen atmosphere for a long time in a cracking step after the secondary recrystallization is completed.

The secondary recrystallization annealing may be performed at a cracking temperature of 900 to 1210°C.

Next, the groove is formed by irradiating a laser to the steel sheet on subjected to the secondary recrystallization annealing. As described above, in an embodiment of the present invention, the order of the step of forming the groove, the shape of the beam formed on the plate, and the energy density of the laser when the groove is formed are important.

The groove 20 is formed by irradiating the laser in a direction crossing the rolling direction (RD direction).

The laser density may be 3.0 and 8.0 J/mm². When the laser density is too low, the thermal effect on the bottom of the groove 20 is small, and the fine recrystallization is generated, and even after the heat treatment is performed during the insulation film forming process, the recrystallized grain 31 in contact with the bottom of the groove 20 may not grow sufficiently. When the laser density is too high, a large amount of heal-up and spatter formed by melting the steel sheet is formed, and the degree of orientation of the recrystallized grain 31 may greatly deteriorate due to their influence. Therefore, it is possible to adjust the laser density within the above-described range. More specifically, the laser density may be 3.0 and 7.0 J/mm².

A laser output may be 500 W or more, a laser scanning speed may be 5 m/s or more, and a laser scanning distance may be 100 mm or more. By using the appropriate output, scanning speed, and scanning distance, the recrystallization may be properly formed at the bottom of the groove. More specifically, the laser output may be 500 to 10 kW, the laser scanning speed may be 10 to 80 m/s, and the laser scanning distance may be 100 to 500 mm.

The laser oscillation method may be used without limitation. That is, continuous oscillation or pulsed mode may be used. In this way, the laser is irradiated so that a surface beam absorption rate is greater than or equal to heat of fusion of the steel sheet, and thus, the groove 20 shown in FIGS. 1 and 2 is formed. Specifically, a laser in Gaussian mode (TEMoo M² ≤ 1.10) may be used.

The laser wavelength may use a laser in the range of 1.06 to 10.6 µm in consideration of the energy absorption rate of the steel sheet 10 on which the metal oxide layer 40 is formed.

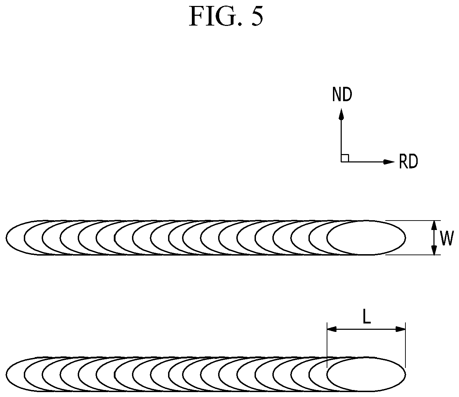

FIG. 5 illustrates a schematic diagram of the shape of a laser beam. In the step of forming the groove, a length L of a laser beam in the steel sheet rolling transverse direction (TD direction) of the laser may be 100 to 500 µm. When the length L of the laser beam in the rolling transverse direction (TD direction) is too short, the laser irradiation time is too short, so an appropriate groove may not be formed, and it is difficult to obtain an effect of improving the iron loss. More specifically, the length of the laser beam may be 150 to 450 µm.

A width W of the laser beam in the steel sheet rolling direction (RD direction) may be 10 to 27 µm. When the width W of the laser beam is too short or too long, the width of the groove 20 may be short or long, and it may not be possible to obtain an appropriate magnetic domain refining effect.

Although the beam shape is shown in an elliptical shape in FIG. 5, the beam may have a shape such as a spherical shape or a rectangular shape, and therefore, the beam shape is not limited.

After the step of forming the groove, the method may further include controlling the height of the spatter to 3.5 µm or less by pickling or brushing.

Next, an insulation film is formed on the steel sheet on which the groove is formed.

The method of forming the insulation film layer may be used without particular limitation, for example, the insulation film layer may be formed by applying an insulation coating solution containing a phosphate. As the insulation coating solution, a coating solution containing 10 wt% or less of inorganic nitride, 60 wt% or less of silica, and 60 wt% or less of metal phosphate may be used. In this case, the metal phosphate may be Al phosphate, Mg phosphate, or a combination thereof, and the content of Al, Mg, or a combination thereof compared to the weight of the insulation coating solution may be 15% by weight or more. The coating solution may further contain boric acid in an amount of 4 wt% or less.

After applying the insulation coating solution, heat treatment may be performed to form an insulation coating. In this case, the temperature may be 750 to 900°C. The particle size of the recrystallized grain 31 may be appropriately controlled through temperature control in an appropriate range.

Hereinafter, the present invention will be described in more detail through exemplary embodiments. However, these exemplary embodiments are merely intended to illustrate the present invention, and the present invention is not limited thereto.

### Examples 1 to 5

A 0.27 mm grain-oriented electrical steel sheet was prepared after secondary recrystallization was completed. The electric steel sheet was irradiated with a 1.0 kW Gaussian mode continuous wave laser to form a groove at an angle of 86° to an RD direction. A width W of the laser beam is 13 µm, and a length L of the laser beam is 200 µm. Grooves were intermittently formed in 8 sections in the TD direction.

An energy density of the laser and a depth of the groove were changed as shown in Table 1 below.

Thereafter, an insulation coating solution was applied, and heat treatment was performed at a temperature of 840°C for 1.5 minutes.

Table 1 shows an improvement rate of iron loss and a deterioration rate of magnetic flux density. The improvement rate in the iron loss was calculated as (W₁ - W₂)/W₁ by measuring an iron loss W₁ of the electric steel sheet on which the groove is not formed and an iron loss W₂ of the electric steel sheet on which the groove is formed. The iron loss was measured as an iron loss value W_{17/50} when a magnetic flux density value was 1.7 Telsa and frequency was 50 Hz.

The deterioration rate of the magnetic flux density was calculated as (B₂ - B₁)/B₁ by measuring the magnetic flux density B₁ of the electric steel sheet on which the groove is not formed and the magnetic flux density B₂ of the electrical steel sheet on which the groove is formed. The magnetic flux density was measured as the magnitude (B₈, Tesla) of the magnetic flux density induced under a magnetic field of 800 A/m.

Particle sizes of the recrystallized grain 31 in contact with the bottom of the groove in the rolling transverse direction cross-section (TD plane) and other recrystallized grains 32, a degree of orientation difference, and a length of the sub boundary were measured by EBSD, which are summarized in Table 1 below.

### Comparative Example 1

Comparative Example 1 was carried out in the same manner as in Example 1, except that, after irradiating a laser to a cold-rolled sheet, primary recrystallization and secondary recrystallization annealing were performed.

### Comparative Examples 2 and 3

Comparative Examples 2 and 3 were carried out in the same manner as in Example 1, except that a shape of a laser beam, an energy density of the laser, and a depth of a groove were changed as shown in Table 1 below.

**(Table 1)**

| | Leng th of laser bea m (µm) | Widt h of lase r bea m (µm) ) | Energ y densit y (J/mm ²) | Degree of orientati on differen ce (°) | Length of sub boundar y (µm/groo ve number) | Improvem ent rate of iron loss (%) | Deteriorati on rate of magnetic flux (%) |
|---|---|---|---|---|---|---|---|
| Example 1 | 500 | 27 | 2.5 | 1.5 | 365 | 9.5 | 2.0 |
| Example 2 | 300 | 20 | 3.1 | 1.3 | 440 | 10.6 | 1.7 |
| Example 3 | 350 | 10 | 3.4 | 3.1 | 550 | 11.0 | 1.6 |
| Example 4 | 250 | 15 | 3.7 | 2.7 | 600 | 11.2 | 1.4 |
| Example 5 | 150 | 13 | 4.0 | 2.6 | 700 | 12.5 | 1.2 |
| Comparat ive Example 1 | 500 | 27 | 2.5 | 0.4 | 5 | 2.3 | 3.0 |
| Comparat | 600 | 30 | 1.5 | 0.3 | 6.5 | -1.5 | 4.0 |
| ive Example 2 | | | | | | | |
| Comparat ive Example 3 | 80 | 8 | 5.0 | 6.5 | 9.0 | -2.5 | 4.5 |

As shown in Table 1, it may be seen that, when the shape of the laser and the energy density of the laser are appropriately controlled when forming the groove, the degree of orientation difference between the recrystallized grains 31 in contact with the bottom of the groove is also low, and the iron loss and magnetic flux density are excellent.

On the other hand, in Comparative Example 1, it could be seen that the cold-rolled sheet was irradiated with a laser, the sub boundary was hardly formed, the degree of orientation was low, and the magnetic flux density deteriorated.

In Comparative Example 2, the shape and energy density of the laser were not properly controlled, so it could be seen that the sub boundary was hardly formed, the degree of orientation was low, and the magnetic flux density deteriorated.

In Comparative Example 3, the shape of the laser was not properly controlled, so it could be seen that the sub boundary was hardly formed and the magnetic flux density deteriorated.

The present invention is not limited to the exemplary embodiments, but may be manufactured in a variety of different forms, and those of ordinary skill in the art to which the present invention pertains will understand that the present invention may be implemented in other specific forms without changing the technical spirit or essential features of the present invention. Therefore, it should be understood that the above-described exemplary embodiments are exemplary in all aspects but are not limited thereto.

**Reference Signs List**

| | | | |
|---|---|---|---|
| 10: | Grain-oriented electrical steel sheet | 20: | Groove, |
| 31: | Secondarily recrystallized grain in contact with bottom of groove | | |
| 32: | Other secondarily recrystallized grain | | |
| 33: | Sub boundary | 40: | Metal oxide layer |
| 50: | Insulation film | | |

## Claims

1. A grain-oriented electrical steel sheet, comprising:
a groove present on a surface of the electrical steel sheet; and
recrystallized grains in contact with a bottom of the groove,
wherein an average degree of orientation difference between recrystallized grains that are in contact with the bottom of the groove, and other recrystallized grains is 0.5 to 10°.

2. The grain-oriented electrical steel sheet of claim 1, wherein:
the recrystallized grain in contact with the bottom of the groove includes a sub boundary, and the sub boundary having a length of 10 µm to 700 µm per groove is present.

3. The grain-oriented electrical steel sheet of claim 1, wherein:
1 to 10 sub boundaries may be present per groove.

4. The grain-oriented electrical steel sheet of claim 1, further comprising:
an insulation film in contact with the groove.

5. The grain-oriented electrical steel sheet of claim 1, wherein:
a depth of the groove is 3 to 15% of a thickness of the steel sheet, and a width of the groove is 10 to 50 µm.

6. A magnetic domain refinement method of a grain-oriented electrical steel sheet, comprising:
preparing a cold-rolled steel sheet;
primary recrystallization annealing the cold-rolled steel sheet;
secondary recrystallization annealing the cold-rolled steel sheet;
forming a groove by irradiating a laser to the steel sheet subjected to the secondary recrystallization annealing; and
forming an insulation film on the steel sheet on which the groove is formed,
wherein, when the laser is irradiated, an energy density of the laser is 3.0 to 8.0 J/mm².

7. The magnetic domain refinement method of claim 6, wherein:
a laser output is 500 W or more, a laser scanning speed is 5 m/s or more, and a laser scanning distance is 100 mm or more.

8. The magnetic domain refinement method of claim 6, wherein:
a wavelength of the laser is 1.06 to 10.6 µm.

9. The magnetic domain refinement method of claim 6, wherein:
the length of the laser beam is 100 to 500 µm, and the width of the laser beam is 10 to 27 µm.

10. The magnetic domain refinement method of claim 6, wherein:
the forming of the insulation film includes performing heat treatment at a temperature of 750 to 950°C.
